Europäisches Patentamt

European Patent Office

Office européen des brevets

(19)

(11) Numéro de publication : **0 177 744**
**B1**

(12) **FASCICULE DE BREVET EUROPÉEN**

(45) Date de publication du fascicule du brevet :
17.08.88

(21) Numéro de dépôt : 85111024.7

(22) Date de dépôt : 02.09.85

(51) Int. Cl.⁴ : **G 01 B  5/10,** G 01 B  7/12,
G 01 B  5/08, G 01 B  3/00

(54) Tête pour la mesure de diamètres de pièces cylindriques.

(30) Priorité : 04.09.84 FR 8413691

(43) Date de publication de la demande :
16.04.86 Bulletin 86/16

(45) Mention de la délivrance du brevet :
17.08.88 Bulletin 88/33

(84) Etats contractants désignés :
CH DE GB IT LI

(56) Documents cités :
DE-A- 2 935 898
DE-B- 1 235 571
FR-A- 1 268 074
FR-A- 2 393 649
GB-A-   595 342
US-A- 3 391 463

(73) Titulaire : MESELTRON S.A.
Avenue Beauregard 14/18
CH-2035 Corcelles (CH)

(72) Inventeur : Fivaz, Robert
Marnière 23
CH-2068 Hauterive (CH)
Inventeur : Pfisterer, Dieter
Lindpaintnerstrasse 58
D-7000 Stuttgart (DE)
Inventeur : Sigg, Hans
Charmettes 15
CH-2006 Neuchâtel (CH)

(74) Mandataire : de Raemy, Jacques et al
ICB Ingénieurs Conseils en Brevets SA Passage
Max. Meuron 6
CH-2001 Neuchâtel (CH)

## Description

La présente invention est relative à une tête de mesure destinée à la mesure de diamètres de pièces cylindriques, en particulier pour commander une machine à rectifier des surfaces cylindriques extérieures, comportant un support, un bloc supérieur et un bloc inférieur attachés élastiquement audit support et arrangés pour pouvoir s'éloigner ou se rapprocher l'un de l'autre en restant alignés l'un sur l'autre, un capteur de déplacement pour mesurer la distance entre les blocs et deux becs de mesure pour s'appuyer sur la pièce cylindrique à mesurer, l'un et l'autre becs étant solidaires respectivement dudit bloc supérieur et dudit bloc inférieur.

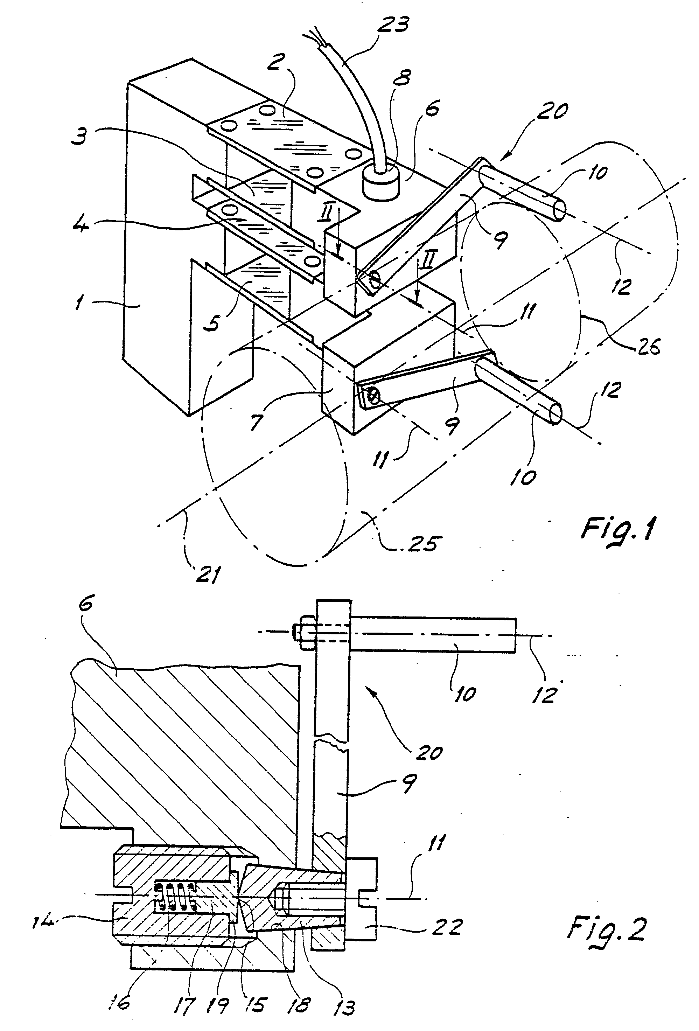

Une tête de mesure répondant à la définition générique qui vient d'être donnée est connue. On en trouvera par exemple une description dans la demande de brevet allemand publiée le 29 novembre 1956 sous le numéro Sch 17 246 Ib/67a. Si l'on se réfère à la figure 1 du document cité, on reconnaît le support 47 auquel sont attachés élastiquement les blocs supérieur 55 et inférieur 55′ au moyen des lames à ressort 51 à 54. La distance entre les blocs est mesurée par un capteur de déplacement situé sur le haut de la figure et dont seul le câble de sortie 71 est référencé. Chacun des blocs 55 et 55′ est équipé d'un bec de mesure référencé respectivement 56 et 57. Le diamètre de la pièce cylindrique à mesurer 66 est saisi par l'extrémité des becs ou touches de mesure qui sont réalisés en métal dur ou en diamant. Ainsi la diminution du diamètre de la pièce provoquée par le travail de la meule 67 est convertie en signal électrique issu du capteur. Ce signal peut être utilisé pour afficher la cote ou seulement la diminution de cote ou encore pour stopper le travail de la meule quand une cote préétablie a été atteinte. Selon les modes d'exécution ce capteur peut être inductif, optique ou encore capacitif.

On notera que pour une pièce cylindrique déterminée, le domaine de mesure ne s'étend que sur quelques dixièmes de millimètres attendu qu'on a affaire ici à des opérations de rectification où l'on enlève que peu de matière. Cependant la tête de mesure doit pouvoir être adaptée à des pièces à usiner qui présentent des cotes nominales très différentes. Il faut donc pouvoir régler l'écartement des becs dans une fourchette importante, par exemple de quelques millimètres à plusieurs centimètres. Dans le document cité, ce problème a été résolu en montant le bec de mesure sur un rail en forme de queue d'aronde qui peut glisser sur un autre rail de forme inversée faisant partie du bloc et muni d'une crémaillère 58. Une roue dentée 63 commandée par un bouton de réglage 64 permet cet ajustement. Une fois ledit ajustement réalisé, on bloque le tout au moyen de la vis 60.

Un arrangement très semblable à celui décrit ci-dessus est montré dans le document FR-A-1,268,074 où l'on retrouve deux blocs attachés élastiquement à un support. Ici cependant les blocs sont disposés côte à côte au lieu d'être superposés l'un à l'autre comme dans le document précédent. Le document FR-A-1,268,074 fait appel à un guide 20 qui porte une plaque 22 au travers de laquelle peut tourner une vis 24 qui est engagée dans un coulisseau 26 susceptible de glisser sur le guide 20 et d'être serré sur celui-ci à l'aide d'une vis 28. Le coulisseau 26 porte une saillie 30 sur laquelle est fixé un bloc 32 qui sert à soutenir rigidement la tige 34 portant une pointe 36 constituant un bec de mesure.

Les constructions qui viennent d'être décrites dans les deux documents cités présentent, pour ce qui concerne le réglage des becs, l'inconvénient de nécessiter des pièces compliquées et donc chères. Il faut relever aussi que le temps nécessaire demandé par cet ajustement est relativement élevé. Enfin, en serrant la vis de blocage il y a toujours le risque d'un déréglement des becs.

Pour palier ces inconvénients, il a déjà été proposé une tête de mesure où les deux becs sont articulés un peu à l'image d'un compas muni de pointes sèches. Ici les axes de rotation des becs sont parallèles à l'axe du cylindre à rectifier. Une fois les pointes en contact avec le cylindre, on bloque les becs. Si ce système a l'avantage de permettre un réglage plus rapide, il présente l'inconvénient de ne pas saisir exactement le diamètre de la pièce à usiner puisque les touches de mesure ne sont plus parallèles mais forment un angle entre elles. Ceci amène à des erreurs de mesure dues aux variations de position inévitables entre la tête de mesure et la pièce à usiner.

Le document BE-A-2935898 décrit pour sa part un transducteur rotatif de mesure de position par contact au moyen de manivelles couplées à des dispositifs de mesure de l'angle de rotation desdites manivelles. Ce système présente le grand inconvénient de nécessiter des capteurs qui permettent une mesure sur un domaine étendu. De tels capteurs sont chers et difficiles à régler.

De façon presque analogue le document US-A-3,391,463 propose un palpeur composé d'un bras 27 et d'une poignée sous la forme d'un rouleau 32. Le bras est monté pivotant sur un axe 29. Il s'agit là de la transformation d'un mouvement rotatif en mouvement linéaire. L'examen du document montre à l'évidence que le domaine de mesure est extrêmement limité ce qui n'est pas le cas dans la présente invention comme on le verra par la suite.

Pour éviter les inconvénients ci-dessus mentionnés et proposer une tête de mesure qu'on puisse ajuster relativement rapidement en même temps que ses touches de mesure restent parallèles entre elles, la présente invention se caractérise par le fait que chacun des becs de mesure est une manivelle comportant un bras et une poignée cylindrique formant touche de mesure, le bras étant emmanché à l'endroit de son axe de rotation sur le bloc correspondant, des moyens étant mis

en œuvre pour assurer le déplacement angulaire puis la fixation du bras sur le bloc, les axes de rotation des bras étant parallèles entre eux et l'axe de chacune des poignées étant disposé parallèlement à l'axe de rotation du bras, de telle façon que les poignées restent parallèles entre elles quel que soit l'angle de rotation de chacun des bras.

L'invention sera comprise maintenant à la lumière de la description qui suit et pour l'intelligence de laquelle on se réfèrera, à titre d'exemple, au dessin dans lequel :

— la figure 1 est une vue en perspective de la tête de mesure équipée de becs selon l'invention ; et

— la figure 2 est une vue en coupe selon la ligne II-II de la figure 1 et présente un détail de construction selon une version préférée de l'invention.

La figure 1 présente la tête de mesure équipée des becs selon l'invention. Au support 1 ou dos de la tête de mesure, fixé normalement sur la table de la machine à rectifier, sont attachés au moyen des ressorts à lame 2, 3, 4 et 5 respectivement un bloc supérieur 6 et un bloc inférieur 7. Ainsi les ressorts à lame 2 et 3 forment avec le dos 1 et le bloc 6 un parallélogramme à ressort. Il en est de même des ressorts à lames 4 et 5 qui forment avec le dos 1 et le bloc 7 un autre parallélogramme à ressort. On comprend que dans cette construction, les blocs 6 et 7 restent toujours alignés l'un sur l'autre quelle que soit la distance qui les sépare. Cette distance est mesurée par un capteur 8 qui convertit la course mécanique en signal électrique recueilli sur le câble 23. Le capteur, capacitif de préférence, comprend une première armature solidaire du bloc 6 et une seconde armature qui peut se mouvoir à l'intérieur de la première et qui est munie d'une pointe de touche qui suit les mouvements du bloc 7. Cette disposition est connue de l'art antérieur. Selon cet art antérieur également, les blocs 6 et 7 sont munis chacun d'un bec de mesure dont deux exécutions connues de l'état de la technique ont été décrites plus haut. Ces becs s'appuient sur la pièce dont il s'agit de saisir le diamètre.

Comme cela est apparent sur la figure 1, la présente invention propose l'utilisation de manivelles 20 comme becs de mesure. Chaque manivelle comporte un bras 9 et une poignée cylindrique 10, ladite poignée formant touche de mesure. Les bras 9 sont emmanchés aux endroits de leurs axes de rotation 11 sur un bloc supérieur 6 et inférieur 7 respectivement. Pour pouvoir ajuster les poignées au diamètre de la pièce à mesurer 25, il est prévu des moyens pour assurer le déplacement angulaire et la fixation de chacun des bras sur le bloc correspondant.

Un élément capital de l'invention réside dans le fait que les axes de rotation 11 des bras 9 sont parallèles entre eux, l'axe 12 de chacune des poignées cylindriques 10 étant disposé parallèlement à l'axe de rotation 11 du bras 9 dont il fait partie. Ainsi les poignées restent toujours parallèles entre elles quel que soit l'angle de rotation de chacun des bras. De cette façon on mesurera toujours la même cote, quelle que soit la distance qui sépare la tête de mesure de la pièce à usiner. Cette disposition convient particulièrement bien dans les systèmes où la cote nominale est donnée par une pièce de référence ou une pièce cylindrique étalon. Alors la valeur affichée par la tête de mesure représente l'écart entre la pièce mesurée et la valeur nominale.

Dans le cas où l'on désire mesurer le diamètre d'une section droite de la pièce à mesurer et qui est représentée en figure 1 par le cercle 26, plusieurs conditions de construction et de disposition seront à remplir. D'abord les bras 9 devront être de longueurs égales. Ensuite l'axe 21 de la pièce à mesurer devra être disposé perpendiculairement à un plan contenant les axes 11 de rotation des bras. Enfin l'axe 21 devra être situé à égale distance des axes 11 de rotation des bras.

La figure 2 est une vue en coupe selon la ligne II-II de la figure 1 et présente un détail de construction selon une version préférée de l'invention. Dans cette construction, les moyens pour assurer le déplacement angulaire puis la fixation de chacune des manivelles comportent un emmanchement conique du bras 9 sur le bloc correspondant 6, une construction identique étant adoptée pour le bloc 7 non représenté. La figure 2 montre encore que la fixation du bras 9 sur le bloc 6 est assurée par une vis de blocage 14 qui agit dans le sens de l'axe de rotation 11 du bras 9.

Plus particulièrement, la figure 2 montre que l'emmanchement conique comporte un pivot conique 13 solidaire du bras 9 et coaxial à son axe de rotation 11 et un palier conique 18 solidaire du bloc 6 pour recevoir ledit pivot conique 13. On comprend qu'en serrant la vis 14, on accroît le frottement entre pivot et palier de telle façon qu'on bloque l'ensemble de la manivelle 20 sur le bloc 6.

Pour minimiser autant que possible le couple de torsion exercé sur le pivot conique 13 quand on serre la vis 14, la figure 2 montre que ledit pivot se termine par une pointe 15 sur laquelle agit la vis de blocage 14. On évite ainsi un dérèglement de la position angulaire du bras 9 quand on serre la vis de blocage. On mentionnera que l'invention n'est pas limitée à cette forme d'exécution et l'on comprendra que c'est l'extrémité de la vis 14 qui pourrait porter la pointe 15, ce qui permettrait d'obtenir le même résultat.

L'invention propose encore des moyens pour maintenir le pivot conique 13 en contact à frottement gras avec le palier conique 18 quand on desserre la vis de blocage 14. A cet effet, la figure 2 montre un têton 17 à portée 19 susceptible de coulisser élastiquement à l'intérieur de la vis de blocage 14 et selon son axe sous l'action de la force de rappel d'un ressort 16. C'est le têton 17 qui agit alors sur la pointe 15 du pivot conique 13. Quand la vis 14 est bloquée, le têton 17 appuie à force sur la pointe 15 retenu qu'il est par la portée 19. Quand on desserre la vis, le têton reste

toujours appuyé contre la pointe mais avec une force plus faible. On peut alors déplacer angulairement le bras de la manivelle, le pivot restant toujours ajusté sans jeu dans son siège, ce qui maintient le parallélisme des poignées 10, même pendant le stade de réglage des manivelles.

Enfin comme le montre la figure 2, on profite du pivot conique 13 pour emmancher sur lui le bras 9 de la manivelle laquelle porte alors un siège correspondant. Pour fixer le bras sur le pivot, on se sert, selon l'exécution montrée au dessin, d'une autre vis de blocage 22. Cette construction permet de détacher très facilement le bras du pivot en vue de son remplacement en même temps qu'elle propose une construction simplifiée puisque la même surface conique sert à la fois et d'emmanchement de la manivelle sur le bloc 6 et de fixation du bras de ladite manivelle sur ledit emmanchement.

L'invention qui vient d'être décrite apporte par rapport aux solutions déjà connues l'avantage d'un réglage rapide tout en assurant une mesure précise de la pièce à usiner et ceci quel que soit le diamètre nominal de cette pièce et la position de la tête de mesure par rapport à ladite pièce. Le réglage rapide est surtout apprécié lorsqu'on est amené à changer souvent de pièces. Sur ce point, la tête proposée permet une grande flexibilité en atelier de fabrication.

**Revendications**

1. Tête de mesure destinée à la mesure de diamètres des pièces cylindriques, en particulier pour commander une machine à rectifier des surfaces cylindriques extérieures, comportant un support (1), un bloc supérieur (6) et un bloc inférieur (7) attachés élastiquement audit support et arrangés pour pouvoir s'éloigner ou se rapprocher l'un de l'autre en restant alignés l'un sur l'autre, un capteur (8) de déplacement pour mesurer la distance entre les blocs et deux becs de mesure pour s'appuyer sur la pièce cylindrique à mesurer (25), l'un et l'autre becs étant solidaires respectivement dudit bloc supérieur et dudit bloc inférieur, caractérisé par le fait que chacun des becs de mesure est une manivelle (20) comportant un bras (9) et une poignée cylindrique (10) formant touche de mesure, le bras étant emmanché à l'endroit de son axe de rotation (11) sur le bloc correspondant, des moyens étant mis en œuvre pour assurer le déplacement angulaire puis la fixation du bras sur le bloc, les axes de rotation des bras étant parallèles entre eux et l'axe (12) de chacune des poignées (10) étant disposé parallèlement à l'axe de rotation du bras dont il fait partie, de telle façon que les poignées restent parallèles entre elles quel que soit l'angle de rotation de chacun des bras.

2. Tête de mesure selon la revendication 1, caractérisée par le fait que le bras (9) sont de longueurs égales, que l'axe (21) de la pièce à mesurer (25) est disposé perpendiculairement à un plan contenant des axes (11) de rotation des bras et que ledit axe (21) de la pièce est disposé à égale distance desdits axes (11) de rotation des bras.

3. Tête de mesure selon la revendication 1, caractérisée par le fait que lesdits moyens comportent un emmanchement conique (13, 18) du bras (9) sur le bloc correspondant (6, 7), la fixation du bras étant assurée par une vis de blocage (14) agissant dans le sens de l'axe de rotation (11) dudit bras.

4. Tête de mesure selon la revendication 3, caractérisée par le fait que l'emmanchement conique comporte un pivot conique (13) solidaire du bras et coaxial à son axe de rotation (11) et un palier conique (18) solidaire du bloc et arrangé pour recevoir le pivot conique, ledit pivot se terminant par une pointe (15) sur laquelle agit la vis de blocage (14).

5. Tête de mesure selon la revendication 4, caractérisée par le fait que la vis de blocage (14) comporte des moyens (16, 17) pour maintenir le pivot conique (13) en contact à frottement gras avec le palier conique (18) quand on desserre la vis de blocage.

6. Tête de mesure selon la revendication 5, caractérisée par le fait que lesdits moyens comportent un téton (17) à portée (19) susceptible de coulisser élastiquement à l'intérieur de la vis de blocage (14) et selon son axe sous l'action de la force de rappel d'un ressort (16), ledit téton agissant sur la pointe (15) du pivot conique (13).

7. Tête de mesure selon la revendication 4, caractérisée par le fait que le bras (9) de la manivelle (20) est emmanché directement sur le pivot conique (13) et que des moyens sont mis en œuvre pour détacher ledit bras dudit pivot.

8. Tête de mesure selon la revendication 7, caractérisée par le fait que lesdits moyens comportent une vis de blocage (22) agissant dans le sens de l'axe dudit pivot.

**Claims**

1. Measuring head for measuring diameters of cylindrical parts, in particular for controlling a machine for grinding outer cylindrical surfaces, comprising a support (1), an upper block (6) and a lower block (7) which are attached flexibly to said support and arranged to be able to move away from or nearer to one another while remaining aligned with one another, a transducer (8) for measuring the distance between the blocks, and two measuring beaks for resting on the cylindrical part (25) to be measured, said beaks being fast with said upper block and said lower block respectively, characterized by the fact that each of said measuring beaks comprises a crank (20) with an arm (9) and a cylindrical rod (10) to form a measuring contact element, the arm being attached at the location of its pivotal axis (11) to the corresponding block, means being provided for the angular adjustment and the fixing of the arm on the block, the pivotal axes of the arms being parallel to each other and the axis (12) of each of the rod (10) being disposed parallel to the pivotal axis of the arm of which it forms part, whereby the rods remain parallel to each other whatever the angle of rotation of each of the arms.

2. Measuring head according to claim 1, characterized by the fact that the arms (9) are of equal length, that the axis (21) of the part (25) to be measured is disposed perpendicular to a plane containing pivotal axes (11) of the arms and that said axis (21) of the part is disposed equidistant from said pivotal axes (11).

3. Measuring head according to claim 1, characterized by the fact that said means comprise a conical joint (13, 18) of the arm (9) on the corresponding block (6, 7) the fixing of the arm being ensured by a clamping screw (14) which acts in the direction of the rotation axis (11) of said arm.

4. Measuring head according to claim 3, characterized by the fact that the conical joint comprises a conical pivot (13) fast with the arm and coaxial with its pivotal axis (11), and a conical bearing (18) integral with the block and arranged to receive the conival pivot, said pivot terminating in a point (15) on which the clamping screw acts.

5. Measuring head according to claim 4, characterized by the fact that the clamping screw (14) comprises means for maintaining the conical pivot (13) in gentle frictional contact with the conical bearing (18) when the clamping screw is slackened.

6. Measuring head according to claim 5, characterized by the fact that said means comprise a stepped (19) stud (17) capable of sliding resiliently inside the clamping screw (14) and along its axis under the action of the restoring force of a spring (16), said stud acting on the point (15) of the conical pivot (13).

7. Measuring head according to claim 4, characterized by the fact that the arm (9) of the crank (20) is directly fitted on the conical pivot (13) and that means are provided for detaching said arm from said pivot.

8. Measuring head according to claim 7, characterized by the fact that said means comprise a clamping screw (22) acting in the direction of the axis of said pivot.

## Patentansprüche

1. Meßkopf zum Diametermessen von zylindrischen Objekten, insbesondere zur Steuerung von Maschinen zum Rundschleifen von Außenflächen, mit einer Halterung (1), einem oberen Block (6) und einem unteren Block (7), die elastisch an der Halterung befestigt sind und sich voneinander entfernen oder zueinander bewegen können, wobei sie ausgerichtet zueinander bleiben, mit einem Verschiebungsfühler (8) zur Feststellung des Abstandes zwischen den Blöcken und mit zwei Meßnasen, um sich auf dem zylindrischen zu messenden Objekt (25) abzustützen, wobei die beiden Nasen mit dem oberen Block bzw. dem unteren Block fest verbunden sind, dadurch gekennzeichnet, daß jede Meßnase eine Kurbel (20) ist, die einen Arm (9) und ein zylindrisches Griffteil (10) aufweist, das die Meßspitze bildet, wobei der Arm an der Stelle seiner Rotationsachse (11) mit dem zugehörigen Block verbunden ist und eine Anordnung vorgesehen ist, um eine Winkelverschiebung und danach die Festlegung des Arms am Block zu ermöglichen, während die Rotationsachsen der Arme zueinander parallel sind und die Achse (12) eines jeden Griffteils (10) parallel zur Rotationsachse des Armes ist zu dem es gehört, derart, daß die Griffteile zueinander parallel bleiben für jeden Rotationswinkel eines jeden Armes.

2. Meßkopf nach Anspruch 1, dadurch gekennzeichnet, daß die Arme (9) gleiche Länge aufweisen, daß die Achse (21) des zu messenden Objektes (25) senkrecht zu einer Ebene angeordnet ist, welche die Rotationsachsen (11) der Arme enthält und daß die Achse (21) des Objektes mit gleichen Abständen zu den Rotationsachsen (11) der Arme angeordnet ist.

3. Meßkopf nach Anspruch 1, dadurch gekennzeichnet, daß die Anordnung eine konische Aufnahmehülse (13, 18) aufweist für den Arm (9) am zugehörigen Block (6, 7), wobei die Festlegung des Armes durch eine Feststellschraube (14) erfolgt, die in Richtung der Rotationsachse (11) des Armes wirkt.

4. Meßkopf nach Anspruch 3, dadurch gekennzeichnet, daß die konische Aufnahmehülse einen konischen Schwenkarm (13) aufweist, der fest mit dem Arm verbunden ist und koaxial zu dessen Rotationsachse (11) ist sowie ein konisches Lager (18), das fest mit dem Block verbunden ist und derart ausgelegt ist, daß es den konischen Schwenkarm aufnimmt, wobei der Schwenkarm in einer Spitze (15) mündet, auf die die Feststellschraube (14) wirkt.

5. Meßkopf nach Anspruch 4, dadurch gekennzeichnet, daß die Feststellschraube (14) eine Anordnung (16, 17) aufweist, um den konischen Schwenkarm (13) in festem Reibungskontakt mit dem konischen Lager (18) zu halten, wenn die Feststellschraube gelöst wird.

6. Meßkopf nach Anspruch 5, dadurch gekennzeichnet, daß die Anordnung eine Zapfen (17) mit Anschlag (19) aufweist, der elastisch im Inneren der Feststellschraube (14) gleiten kann entlang seiner Achse unter der Wirkung der Kraft einer Rückholfeder (16), wobei der Zapfen die Spritze (15) des konischen Schwenkarms (13) beaufschlagt.

7. Meßkopf nach Anspruch 4, dadurch gekennzeichnet, daß der Arm (9) der Kurbel (20) direkt in den konischen Schwenkarm (13) eingesetzt ist und daß eine Anordnung vorgesehen ist, um diesen Arm von Schwenkarm zu lösen.

8. Meßkopf nach Anspruch 7, dadurch gekennzeichnet, daß diese Anordnung eine Feststellschraube (22) aufweist, die in Richtung der Achse des Schwenkarms wirkt.

Fig.1

Fig.2